(19) Europäisches Patentamt
European Patent Office
Office européen des brevets

(11) **EP 4 681 942 A1**

(12) **EUROPEAN PATENT APPLICATION**
published in accordance with Art. 153(4) EPC

(43) Date of publication:
**21.01.2026 Bulletin 2026/04**

(21) Application number: **24770902.5**

(22) Date of filing: **12.03.2024**

(51) International Patent Classification (IPC):
**B60C 9/00** (2006.01)          **B60C 9/20** (2006.01)
**B60C 19/00** (2006.01)

(52) Cooperative Patent Classification (CPC):
**B60C 9/00; B60C 9/20; B60C 19/00**

(86) International application number:
**PCT/JP2024/009636**

(87) International publication number:
**WO 2024/190797 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2023 JP 2023040159**

(71) Applicant: BRIDGESTONE CORPORATION
Chuo-ku
Tokyo 104-8340 (JP)

(72) Inventors:
• KAWASHIMA, Keisuke
  Tokyo 104-8340 (JP)
• TOKUTOMI, Kazutaka
  Tokyo 104-8340 (JP)
• SHIZUKU, Takahisa
  Tokyo 104-8340 (JP)
• SATO, Takayuki
  Tokyo 104-8340 (JP)

(74) Representative: **Marks & Clerk LLP**
**15 Fetter Lane**
**London EC4A 1BW (GB)**

(54) **TIRE**

(57)     To provide a tire in which a decrease in durability is suppressed, even though steel filaments derived from recycled iron are used. In order to solve the above problem, the present discsloure provides a tire including a belt layer including a steel cord, wherein the steel cord is composed of steel filaments and 30 mass% or more of the steel filaments are derived from recycled iron, and the filaments derived from the recycled iron have an N element content of 60 mass ppm or more.

EP 4 681 942 A1

# EP 4 681 942 A1

**Description**

TECHNICAL FIELD

The present disclosure relates to a tire.

BACKGROUND

In recent years, from the perspective of resource recycling, it has been required to use recycled materials for various members used in tires. For example, PTL 1 refers to the use of organic fibers derived from recycled materials, particularly fibers made of recycled polyethylene terephthalate (PET), as reinforcing members for tires.

CITATION LIST

Patent Literatures

PTL 1: EP 3753965 A1

SUMMARY

(Technical Problem)

On the other hand, as reinforcing members for tires, in addition to organic fibers, steel cords are also used. Therefore, from the perspective of resource recycling, the use of steel cords made from recycled iron as a raw material has been required.

However, steel cords taken from scrap iron or from tires often contain coating materials such as plating and various additives, and these are frequently included as impurities in the recycled iron. Steel filaments (wire rods) manufactured using such recycled iron as a raw material are considered to have lower strength compared to general steel filaments. Therefore, when steel cords made from steel filaments derived from recycled iron are used as reinforcing members for the belt layer of a tire, it is considered that the durability of the tire is affected.

Accordingly, the present disclosure addresses the above conventional problems, and an object thereof is to provide a tire in which a decrease in durability is suppressed, even though steel filaments derived from recycled iron are used.

(Solution to Problem)

The gist of the tire of the present disclosure that solves the above problem is as follows.

[1] A tire comprising a belt layer including a steel cord,

wherein the steel cord is composed of steel filaments, 30 mass% or more of the steel filaments are derived from recycled iron, and
the filaments derived from the recycled iron have an N element content of 60 mass ppm or more.

The tire of the present disclosure described in [1] suppresses a decrease in durability, even though steel filaments derived from recycled iron are used.

[2] The tire according to [1], wherein the steel filaments derived from the recycled iron have a C element content of 0.7 to 1.0 mass%, a Cu element content of 0.01 to 0.4 mass%, and a Cr element content of 0.05 to 0.3 mass%.

The tire described in [2] is preferable from an environmental perspective, since it uses steel cords that can be manufactured from general recycled iron.

[3] The tire according to [2], wherein the steel filaments derived from the recycled iron have the Cu element content of 0.05 to 0.4 mass%.

The tire described in [3] is also preferable from an environmental perspective, since it uses steel cords that can be manufactured from general recycled iron.

[4] The tire according to any one of [1] to [3], wherein the steel filaments derived from the recycled iron have a diameter of 0.3 mm or less.

The tire described in [4] is less likely to have steel filaments break, and has high durability.

[5] The tire according to any one of [1] to [4], wherein the steel cord further includes steel filaments derived from non-recycled iron, and

the steel filaments derived from the non-recycled iron have an N element content of 20 to 40 mass ppm, a C element content of 0.7 to 0.85 mass%, a Cu element content of 0 to 0.1 mass%, and a Cr element content of 0 to 0.1 mass%.

The tire described in [5] further suppresses a decrease in durability.

[6] The tire according to any one of [1] to [5], further comprising a belt protective layer on an outer side in a tire radial direction of the belt layer,

wherein the belt protective layer includes an organic fiber cord, and the organic fiber cord has an elastic modulus of 4.0 mN/(dtex·%) or more.

The tire described in [6] has improved durability.

[7] The tire according to any one of [1] to [6], wherein the steel cord has a flat cross-section, and a ratio of a major axis to a minor axis of 1.1 or more.

The tire described in [7] further suppresses a decrease in durability.

(Advantageous Effect)

According to the present disclosure, it is possible to provide a tire in which a decrease in durability is suppressed, even though steel filaments derived from recycled iron are used.

BRIEF DESCRIPTION OF THE DRAWINGS

In the accompanying drawings:

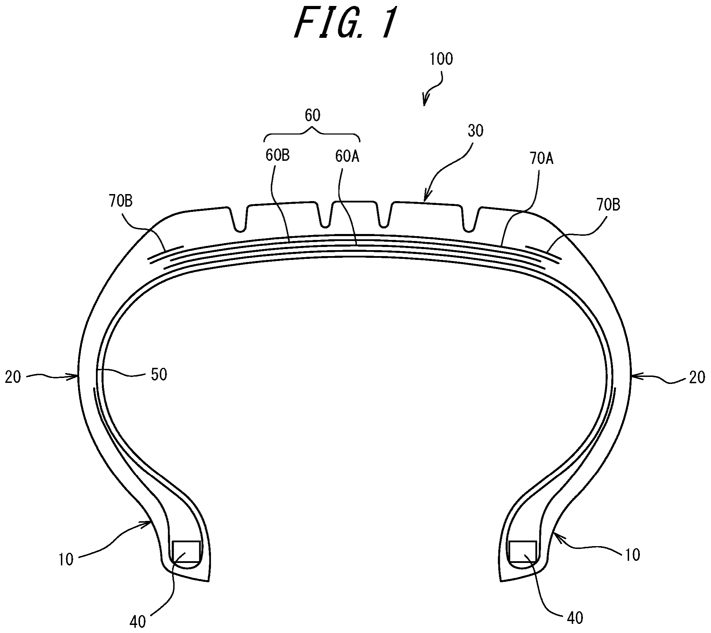

FIG. 1 is a cross-sectional view illustrating one embodiment of a tire of the present disclosure.

DETAILED DESCRIPTION

Hereinafter, the tire of the present disclosure will be exemplified and described in detail based on its embodiments.

<Definitions>

The compounds described in the present specification may be partially or entirely derived from fossil resources, may be derived from biological resources such as plant resources, or may be derived from recycled resources such as used tires. Further, they may be derived from a mixture of any two or more of fossil resources, biological resources, and recycled resources.

In the present specification, the N (nitrogen) element content, C (carbon) element content, Cu (copper) element content, Cr (chromium) element content, and Fe (iron) element content of steel filaments derived from recycled iron and steel filaments derived from non-recycled iron, as well as the total Cu element content in the steel filaments derived from recycled iron and the plating layer, refer to the ladle value (i.e., the ladle value measured for the molten steel) when the raw steel material is in a molten state, and are values measured by spark discharge emission spectroscopic analysis.

<Tire>

The tire of the present embodiment includes a belt layer containing a steel cord.

In the tire of the present embodiment, the steel cord is composed of steel filaments, 30 mass% or more of the steel filaments are derived from recycled iron, and the filaments derived from the recycled iron have an N element content of 60 mass ppm or more.

The tire of the present embodiment includes a belt layer containing a steel cord, the steel cord is composed of steel filaments, and 30 mass% or more of the total mass of steel filaments in the belt layer are derived from recycled iron.

When the proportion of steel filaments derived from recycled iron in the entire steel cord of the belt layer is 30 mass% or more, it is possible to sufficiently circulate resources while suppressing a decrease in the durability of the belt layer.

The recycled iron serving as the raw material for the steel filaments derived from recycled iron is not particularly limited as long as it is recycled, and may be derived from scrap iron, steel cord taken out from tires, or the like. Further, from the viewpoint of reducing $CO_2$ emissions, it is preferable that the recycled iron is derived from an electric furnace (electric furnace steelmaking method). In the electric furnace steelmaking method, for example, an arc discharge is generated in an electric furnace, the raw material is melted by the heat of the discharge, impurities are removed, and iron (steel material) can be obtained. On the other hand, in the blast furnace method, which is generally used in conventional steelmaking, for example, iron ore is reduced using coke derived from coal in a blast furnace to obtain iron (steel material), and thus a large amount of $CO_2$ is inevitably generated. In general, the amount of $CO_2$ emissions in an electric furnace is about 1/4 that in a blast furnace, so by using recycled iron derived from an electric furnace for steel filaments, $CO_2$ emissions can be greatly reduced.

In addition, in the tire of the present embodiment, the steel filaments derived from recycled iron are required to have an N (nitrogen) element content of 60 mass ppm or more.

Generally, new iron such as that obtained from a blast furnace has high purity and an N element content of less than 60 mass ppm, whereas general recycled iron (i.e., recycled iron that is not highly refined) has an N element content of 60 mass ppm or more. The steel filaments derived from recycled iron can be produced using such general recycled iron as a raw material, and since advanced refining is not required, the manufacturing process is not complicated, energy consumption can be reduced, and $CO_2$ emissions can also be reduced, which is preferable from an environmental perspective. From a similar viewpoint, it is preferable that the steel material derived from recycled iron has an N element content of 70 mass ppm or more.

Further, from the viewpoint of durability, the N element content of the steel filaments derived from recycled iron is preferably 200 mass ppm or less, and more preferably less than 90 mass ppm. Note that the reinforcing cord of the belt layer of the tire is subjected to loads from various directions during tire manufacture and use. Therefore, the steel filaments constituting the reinforcing cord of the belt layer of the tire are required to have excellent durability against twisting as one index of durability. Steel filaments made from steel material derived from recycled iron with an N element content of less than 90 mass ppm are particularly excellent in durability against twisting.

Further, the steel filaments derived from recycled iron preferably have a C (carbon) element content of 0.7 to 1.0 mass%, and more preferably 0.7 to 0.85 mass%. Recycled iron with a C element content within the above range does not require advanced refining, is easily obtainable, and steel filaments with a C element content within the above range can be produced from general recycled iron. In addition, recycled iron (steel material) with a C element content of 0.85 mass% or less has high ductility, and even when processed into steel filaments with a small diameter, breakage can be prevented. Therefore, a tire using steel filaments derived from recycled iron with a C element content of 0.7 to 0.85 mass% is less likely to have steel filaments break and has high durability.

Furthermore, the steel filaments derived from recycled iron preferably have a Cu (copper) element content of 0.01 to 0.4 mass%, and more preferably 0.05 to 0.4 mass%. Recycled iron with a Cu element content within the above range does not require advanced refining, is easily obtainable, and steel filaments with a Cu element content within the above range can be produced from general recycled iron.

Furthermore, the steel filaments derived from recycled iron preferably have a Cr (chromium) element content of 0.05 to 0.3 mass%. Recycled iron with a Cr element content within the above range does not require advanced refining, is easily obtainable, and steel filaments with a Cr element content within the above range can be produced from general recycled iron.

The steel filaments derived from recycled iron are required to have an N (nitrogen) element content of 60 mass ppm or more, and preferably have a C element content of 0.7 to 1.0 mass%, a Cu element content of 0.05 to 0.4 mass%, and a Cr element content of 0.05 to 0.3 mass%. Such steel filaments can be produced using general recycled iron as a raw material, and since advanced refining is not required, the manufacturing process is not complicated and energy consumption can be reduced. In addition, $CO_2$ emissions can also be reduced, which is preferable from an environmental perspective.

Note that the steel filaments derived from recycled iron preferably have iron as the main component, with an Fe (iron) element content of 98 mass% or more.

The steel filaments derived from recycled iron preferably have a diameter of 0.3 mm or less, and more preferably 0.25 mm or less. When the diameter of the steel filaments derived from recycled iron is 0.3 mm or less, the steel filaments can follow the deformation of the tire, so the cord is less likely to break during tire running, and there is also the advantage of being lightweight.

Note that, from the viewpoint of strength and durability, the diameter of the steel filaments is preferably 0.1 mm or more.

The steel filaments derived from recycled iron are manufactured from recycled iron, and the manufacturing method is not particularly limited. For example, steel material derived from scrap iron or steel cord taken out from tires may be subjected to a drawing process to produce steel filaments derived from recycled iron.

Further, it is preferable that the steel filaments derived from recycled iron are provided with a plating layer covering the steel filaments.

Here, the total Cu element content in the steel filaments and the plating layer is preferably 0.2 to 1.0 mass%. The Cu element content refers to the content of Cu element in the total of the steel filament portion derived from recycled iron and the plating layer portion.

When the total Cu element content in the steel filaments derived from recycled iron and the plating layer is 0.2 mass% or more, the quality of rubber-steel adhesion can be ensured, and when it is 1.0 mass% or less, the quality of the steel filaments can be ensured. When the total Cu element content in the steel filaments derived from recycled iron and the plating layer is 0.2 to 1.0 mass%, the adhesiveness between the steel filaments derived from recycled iron and the coating rubber is high, and the durability of the tire is improved.

For example, a plating layer can be provided by plating the surface of the steel filaments derived from recycled iron. Examples of such plating include brass plating and copper plating, and among these, brass plating is preferable from the viewpoint of adhesiveness with the coating rubber. In brass plating, the ratio of copper to zinc (copper:zinc) is preferably in the range of 60:40 to 70:30 by mass.

The steel cord of the belt layer may further include steel filaments derived from non-recycled iron, and the steel filaments derived from non-recycled iron preferably have an N (nitrogen) element content of 20 to 40 mass ppm, a C (carbon) element content of 0.7 to 0.85 mass%, a Cu (copper) element content of 0 to 0.1 mass%, and a Cr (chromium) element content of 0 to 0.1 mass%. When the steel cord of the belt layer includes steel filaments derived from non-recycled iron having such a composition, a further decrease in the durability of the steel cord can be suppressed, and a further decrease in the durability of the tire can be suppressed. Note that the steel filaments derived from non-recycled iron preferably have iron as the main component, with an Fe (iron) element content of 98 mass% or more.

The diameter of the steel filaments derived from non-recycled iron is not particularly limited, and may be the same as or different from the diameter of the steel filaments derived from recycled iron.

Further, it is preferable that the steel filaments derived from non-recycled iron are provided with a plating layer covering the steel filaments. The plating layer of the steel filaments derived from non-recycled iron may be the same as or different from the plating layer of the steel filaments derived from recycled iron.

As the non-recycled iron serving as the raw material for the steel filaments derived from non-recycled iron, it is preferable, from the viewpoint of the durability of the steel cord, to use one with few impurities, and for example, iron derived from iron ore (iron derived from a blast furnace) is preferable.

The steel filaments constituting the carcass layer satisfy the following formula when the diameter of the filament is X (mm) and the tensile strength of the filament is Y (MPa):

$$4000 - 2000X \leqq Y \leqq 4500 - 2000X$$

By using a cord having a structure in which filaments satisfying the above formula are twisted together for the carcass layer, the strength of the carcass layer can be improved, the plunger level can be improved, and the anti-cut resistance of the tire can be supplemented.

Here, the tensile strength of the filament is determined in accordance with ISO 17832:2009.

The filaments constituting the cord of the carcass layer preferably have, from the viewpoint of fatigue resistance, a surface layer hardness of 90 to 110% relative to the hardness of the inner layer, and particularly preferably 100%. The hardness can be measured, for example, by Vickers hardness. The surface layer of the filament refers to the layer up to a depth of 0.01 mm from the outermost surface, and the inner side thereof refers to the inner layer of the filament. The hardness can be measured at a depth of 0.005 mm from the outermost surface for the surface layer, and at a region deeper than 0.04 mm for the inner layer.

In the tire of the present embodiment, the arrangement of the steel filaments derived from recycled iron is not particularly limited, and for example, (1) both steel filaments derived from recycled iron and steel filaments derived from non-recycled iron may be used together in the same belt layer, or (2) a belt layer composed of steel filaments derived from recycled iron and a belt layer composed of steel filaments derived from non-recycled iron may be provided separately. In either mode, the steel filaments derived from non-recycled iron can supplement the strength of the steel filaments derived from recycled iron and suppress a decrease in the durability of the tire.

The structure of the steel cord constituting the belt layer is not particularly limited, but examples include:

(1) a layer-twisted structure such as an L+M structure or L+M+N structure, in which M or M+N sheath filaments (where M and N are integers greater than 1) are twisted around L core filaments (where L is an integer of 1 or more; the core filaments may be twisted or bundled without twisting),

(2) a 1×N structure in which two or more steel filaments are spirally twisted together (where N is an integer of 2 or more),

(3) a multiple-twisted structure in which a plurality of cords of the above layer-twisted structure or 1×N structure are arbitrarily combined and twisted together,

(4) a monofilament structure in which steel filaments are arranged in a row without being twisted together,

and the like.

In the L+M+N structure, 1×N structure, and multiple-twisted structure, the steel filaments may be arranged so as not to be in close contact with each other, and gaps may be provided between the steel filaments. In such a structure, the coating rubber easily penetrates into the inside of the steel cord, thereby improving the durability of the steel cord.

Further, the surface of the steel filaments or the surface of the steel cord may be coated with a resin. In such a structure, the durability of the steel cord is improved. Examples of the resin include thermoplastic resins and thermoplastic elastomers. Examples of thermoplastic resins include polyamide-based thermoplastic resins, polyester-based thermoplastic resins, olefin-based thermoplastic resins, polyurethane-based thermoplastic resins, vinyl chloride-based thermoplastic resins, polystyrene-based thermoplastic resins, and the like. On the other hand, examples of thermoplastic elastomers include polyamide-based thermoplastic elastomers (TPA), polyester-based thermoplastic elastomers (TPC), polystyrene-based thermoplastic elastomers (TPS), polyurethane-based thermoplastic elastomers (TPU), olefin-based thermoplastic elastomers (TPO), thermoplastic rubber crosslinked products (TPV), or other thermoplastic elastomers (TPZ), and the like.

The strength of the belt layer is preferably 40 kN or more, and also preferably 120 kN or less. When the strength of the belt layer is 40 kN or more, the durability of the tire is improved, and when the strength of the belt layer is 120 kN or less, both durability and weight can be balanced.

Note that, in the present specification, the strength of the belt layer is a value measured by a tensile test and converted to the strength per 5 cm of the crown portion.

Further, the steel cord in the belt layer preferably has a flat cross-section, with a ratio of the major axis to the minor axis of 1.1 or more. When such a steel cord is applied to a tire, by arranging the major axis direction of the outer hull shape of the steel cord along the width direction of the belt layer, the in-plane flexural rigidity of the belt layer can be increased and the durability of the belt layer can be improved.

The tire of the present embodiment preferably further includes a belt protective layer disposed on the outer side in the tire radial direction of the belt layer. By disposing a belt protective layer on the outer side in the tire radial direction of the belt layer, the durability of the belt layer can be improved.

The belt protective layer preferably includes an organic fiber cord. Further, the organic fiber cord preferably has an elastic modulus of 4.0 mN/(dtex·%) or more. By applying an organic fiber cord with an elastic modulus of 4.0 mN/(dtex·%) or more to the belt protective layer, the durability of the belt layer can be further improved.

Here, the elastic modulus of the organic fiber cord is a value calculated by converting the slope (N/%) between the load corresponding to 1% elongation and the load corresponding to 2% elongation in the load-elongation curve of the organic fiber cord measured at room temperature (23°C) to a value per 1 dtex. Further, various physical properties of the organic fiber cord can be measured in accordance with JIS L 1013 "Test methods for chemical fiber filament yarns".

The material of the organic fiber cord is not particularly limited, but examples include polyesters such as polyethylene terephthalate (PET), polyethylene naphthalate (PEN), and polyethylene furanoate (PEF); nylons such as 6-nylon[®], 6,6-nylon[®], and 4,6-nylon[®]; and cellulose such as rayon and lyocell. Among these, polyethylene terephthalate is preferable, that is, the organic fiber cord as a reinforcing member of the belt protective layer is preferably a cord made of polyethylene terephthalate (hereinafter, sometimes simply referred to as "polyethylene terephthalate cord"). Polyethylene terephthalate cord has higher rigidity than generally used nylon cords and the like, and is excellent in improving the durability of the belt layer.

In order to improve the elastic modulus of the organic fiber cord, it is preferable to perform a dip treatment under high tension. Here, in order to sufficiently increase the elasticity of the organic fiber cord, it is preferable that the tension during the adhesive treatment is $6.9 \times 10^{-2}$ N/tex or more. However, the method for increasing the elasticity of the organic fiber cord is not limited to this, and other methods such as lowering the twist of the organic fiber cord may be used. The adhesive treatment consists of dry treatment, hot treatment, normalize treatment, and the like, and is performed by appropriately adjusting the temperature and time in addition to the tension. In the present disclosure, the adhesive treatment may be performed by either a one-bath treatment or a two-bath treatment, but it is preferable to perform a two-bath treatment, and it is preferable to apply a tension of $6.9 \times 10^{-2}$ N/tex or more to the cord during the hot treatment of the two-bath process.

The organic fiber cord preferably has a twist coefficient $\alpha$ represented by the following formula (1):

$$\alpha = T \times D^{1/2} \ \dots \ (1)$$

[In the formula, $\alpha$ is the twist coefficient, T is the number of twists (turns/100 mm), and D is the total fineness of the cord (dtex).] The twist coefficient $\alpha$ is preferably 500 to 2500. When the twist coefficient $\alpha$ of the organic fiber cord is 500 or more, the binding force of the filaments becomes strong, resulting in sufficient adhesiveness, and when it is 2500 or less, the effect of improving the durability of the belt layer is excellent.

Further, the organic fiber cord preferably has a total fineness of 1000 to 3500 dtex. When the total fineness of the organic fiber cord is 1000 dtex or more, the effect of improving the durability of the belt layer is excellent, and when it is 3500 dtex or less, the cords can be densely embedded, and sufficient rigidity per unit width can be ensured.

It should be noted that, since the raw tire expands by several percent in the tire radial direction during vulcanization, if the organic fiber cord used for the belt protective layer has a high elastic modulus, it may not be able to follow the expansion of the tire during vulcanization molding, and the organic fiber cord in the belt protective layer and the steel cord in the belt layer may come into direct contact without the elastomer (coating rubber) in between. Therefore, it is preferable to design the diameter of the raw tire to a certain size in advance, and to appropriately adjust the tension when winding the organic fiber cord coated with elastomer to form the belt protective layer, so as to sufficiently secure the gauge between the cords of the belt layer and the belt protective layer. Accordingly, it is preferable that the organic fiber cord has an elongation rate in the tire after vulcanization with respect to the original length of the cord before vulcanization of 2% or less. When the tire is molded with a cord elongation rate of 2% or less, contact between the organic fiber cord and the belt layer can be suppressed, and separation at the belt edge during running can be prevented.

The raw material of the organic fiber cord is not particularly limited, and may be derived from synthetic products, may be derived from biological sources, may be derived from mechanical recycling by crushing, melting, and re-spinning PET products such as PET bottles, or may be derived from chemical recycling by depolymerizing and repolymerizing PET products such as PET bottles.

Further, the form of the organic fiber cord is not particularly limited, and may be a single-twist structure or a twisted structure (such as a double-twist structure). In the case of a single-twist structure, for example, the raw yarns are aligned and twisted in one direction to obtain a twisted yarn cord. In the case of a double-twist structure, for example, the raw yarns are given a primary twist, then combined in plural and given a secondary twist in the opposite direction to obtain a twisted yarn cord.

The organic fiber cord (particularly, a polyethylene terephthalate cord) is preferably subjected to adhesive treatment with an adhesive composition containing a thermoplastic polymer (A), a thermosetting aqueous urethane resin (B), and an epoxy compound (C), or an adhesive composition further containing a rubber latex (D) in addition to (A) to (C), wherein the main chain of the thermoplastic polymer (A) substantially does not have an addition-reactive carbon-carbon double bond, and has at least one functional group as a pendant group having crosslinkability. By performing adhesive treatment with such an adhesive composition, the adhesiveness with the elastomer (coating rubber) at high temperature can be improved.

Conventionally, as an adhesive treatment for organic fiber cords (particularly, polyethylene terephthalate cords), a so-called two-bath treatment has been performed, in which an epoxy or isocyanate is applied to the cord surface, and then a resin obtained by mixing resorcinol, formaldehyde, and latex (hereinafter referred to as RFL resin) is applied thereon. However, in such a method, the resin used in one bath becomes very hard, the strain input to the cord increases, and the cord fatigue resistance may decrease. Also, such a resin can exhibit sufficient cord-elastomer adhesiveness at room temperature, but the adhesiveness may decrease drastically at high temperatures of 130°C or higher. In contrast, by using a single-bath mixed solution containing at least one functional group as a pendant group having crosslinkability and a thermoplastic polymer (A) that substantially does not contain an addition-reactive carbon-carbon double bond in the main chain structure, a thermosetting aqueous urethane resin (B), and an epoxy compound (C), it is possible to sufficiently secure adhesion with the elastomer (coating rubber) even at high temperatures of 180°C or higher without hardening the cord.

The main chain of the thermoplastic polymer (A) is mainly a linear structure, and as the main chain, for example, acrylic polymer, vinyl acetate polymer, vinyl acetate-ethylene copolymer, and other ethylene-based addition polymers, or urethane-based polymeric polymers are preferred. However, the thermoplastic polymer (A) only needs to have the function of suppressing resin fluidity at high temperatures and ensuring resin breaking strength by crosslinking of the functional group of the pendant group, and is not limited to ethylene-based addition polymers and urethane-based polymeric polymers.

As the functional group of the pendant group of the thermoplastic polymer (A), oxazoline group, bismaleimide group, (blocked) isocyanate group, aziridine group, carbodiimide group, hydrazino group, epoxy group, epithio group, and the like are preferred.

The above-described thermoplastic polymer (A), thermosetting aqueous urethane resin (B), epoxy compound (C), and rubber latex (D) can be those described in JP 2023-040157 A and JP 2023-030762 A, respectively.

In the adhesive treatment of the organic fiber cord (particularly, polyethylene terephthalate cord), it is preferable to use a mixed solution of the three types, i.e., the thermoplastic polymer (A), thermosetting aqueous urethane resin (B), and epoxy compound (C) (adhesive composition) as a single-bath treatment solution, and to use a conventional RFL resin solution as a two-bath treatment solution. Further, in the above adhesive treatment, it is also possible to perform treatment with only a single bath using a mixed solution (adhesive composition) of the thermoplastic polymer (A), thermosetting aqueous urethane resin (B), epoxy compound (C), and rubber latex (D).

In the above adhesive composition, the proportion (dry mass ratio) of the thermoplastic polymer (A) is preferably 2 to 75%, the proportion (dry mass ratio) of the thermosetting aqueous urethane resin (B) is preferably 15 to 87%, the proportion (dry mass ratio) of the epoxy compound (C) is preferably 11 to 70%, and the proportion (dry mass ratio) of the rubber latex (D) is preferably 20% or less.

On the other hand, from the viewpoint of environmental protection, it is preferable to use a dip treatment solution that does not contain resorcinol and formalin as the adhesive composition for the organic fiber cord. As such a dip treatment solution, for example, a composition containing a rubber latex (a) having an unsaturated diene and at least one compound (b) selected from compounds having a skeleton structure composed of polyether and an amine functional group, compounds having an acrylamide structure, polypeptides, polylysine, and carbodiimide can be mentioned. Further, as such a dip treatment solution, for example, in addition to the above rubber latex (a) having an unsaturated diene and compound (b), a composition further containing at least one selected from an aqueous compound (c) having a (thermally dissociable blocked) isocyanate group, polyphenol (d), and polyvalent metal salt (e) can be mentioned.

In addition, as a dip treatment solution not containing resorcinol and formalin, a composition containing polyphenols (I) and aldehydes (II) can also be mentioned. Such a composition may further contain at least one of an isocyanate compound (III) and a rubber latex (IV) in addition to the polyphenols (I) and aldehydes (II).

When the adhesive composition for coating (adhesive treatment) of the organic fiber cord contains polyphenols (I) and aldehydes (II), even in cases where resorcinol is not used in consideration of environmental impact, favorable adhesiveness can be exhibited.

[Polyphenols (I)]

By including polyphenols (I) as a resin component in the adhesive composition, the adhesiveness to the organic fiber cord can be enhanced. Here, the polyphenols (I) are typically water-soluble polyphenols, and are not particularly limited as long as they are polyphenols other than resorcinol (resorcinol). In the polyphenols (I), the number of aromatic rings or the number of hydroxyl groups can be appropriately selected.

From the viewpoint of achieving even better adhesiveness, the polyphenols (I) preferably have two or more hydroxyl groups, and more preferably have three or more hydroxyl groups. When the polyphenols have three or more hydroxyl groups, the polyphenol or a condensate thereof dissolves in the adhesive composition (dip treatment solution) containing water. As a result, the polyphenols can be uniformly distributed within the adhesive composition, thereby achieving even better adhesiveness. Furthermore, when the polyphenols (I) are polyphenols containing a plurality (two or more) of aromatic rings, in each of those aromatic rings, two or three hydroxyl groups are present at the ortho, meta, or para positions.

As the polyphenols (I), for example, those described as polyphenol compounds in WO2022/130879 can be used. These polyphenols (I) may be used alone or in combination of two or more.

[Aldehydes (II)]

By including aldehydes (II) as a resin component in the adhesive composition in addition to the above polyphenols (I), high adhesiveness can be achieved together with the above polyphenols (I). Here, the aldehydes (II) are not particularly limited and can be appropriately selected according to the required performance. In the present specification, the aldehydes (II) also include derivatives of aldehydes that are generated from aldehydes as a source.

As the aldehydes (II), for example, monoaldehydes such as formaldehyde, acetaldehyde, butylaldehyde, acrolein, propionaldehyde, chloral, butylaldehyde, caproaldehyde, allylaldehyde, or aliphatic dialdehydes such as glyoxal, malonaldehyde, succinaldehyde, glutaraldehyde, adipaldehyde, aromatic ring-containing aldehydes, dialdehyde starch, and the like can be mentioned. These aldehydes (II) may be used alone or in combination of two or more.

The aldehydes (II) are preferably aromatic ring-containing aldehydes or include aromatic ring-containing aldehydes. This is because even better adhesiveness can be obtained. Further, the aldehydes (II) preferably do not contain formaldehyde. Here, "do not contain formaldehyde" means, for example, that the content of formaldehyde in the total mass of aldehydes is less than 0.5 mass%.

In the adhesive composition, it is preferable that the mass ratio (content of aromatic ring-containing aldehydes/content of polyphenols) of polyphenols and aromatic ring-containing aldehydes in the condensed state is 0.1 or more and 3 or less. In this case, the hardness and adhesiveness of the resin, which is the product of the condensation reaction between the polyphenols and the aromatic ring-containing aldehydes, become more suitable. From the same viewpoint, the mass ratio (content of aromatic ring-containing aldehydes/content of polyphenols) of polyphenols and aromatic ring-containing aldehydes in the adhesive composition is more preferably 0.25 or more, and more preferably 2.5 or less.

Note that the above mass ratio is based on the mass of the dried material (solid content ratio).

Further, the total content of polyphenols (I) and aldehydes (II) in the adhesive composition is preferably 3 to 30 mass%. In this case, more excellent adhesiveness can be ensured without deteriorating operability and the like. From the same viewpoint, the total content of polyphenols (I) and aldehydes (II) in the adhesive composition is more preferably 5 mass% or more, and more preferably 25 mass% or less.

Note that the above total content is based on the mass of the dried material (solid content ratio).

[Isocyanate Compounds (III)]

The adhesive composition preferably further contains an isocyanate compound (III) in addition to the above polyphenols (I) and aldehydes (II). In this case, the adhesiveness of the adhesive composition can be further enhanced by the synergistic effect with the polyphenols (I) and aldehydes (II).

Here, the isocyanate compound (III) is a compound that promotes adhesion to the resin material (for example, phenol/aldehyde resin obtained by condensing polyphenols (I) and aldehydes (II)), which is the adherend of the adhesive composition, and is a compound having an isocyanate group as a polar functional group. These isocyanate compounds (III) may be used alone or in combination of two or more.

The isocyanate compound (III) is not particularly limited, but from the viewpoint of further improving adhesiveness, it preferably contains an (blocked) isocyanate group-containing aromatic compound. By including an (blocked) isocyanate group-containing aromatic compound in the adhesive composition, the (blocked) isocyanate group-containing aromatic compound is distributed in the vicinity of the interface between the organic fiber cord and the adhesive composition, resulting in a further adhesion-promoting effect, and by this effect, the adhesiveness of the adhesive composition to the organic fiber cord can be further enhanced.

As the (blocked) isocyanate group-containing aromatic compound, those described in JP 2023-040157 A and JP 2023-030762 A can be used.

The content of the isocyanate compound (III) in the adhesive composition is not particularly limited, but from the viewpoint of more reliably ensuring excellent adhesiveness, it is preferably 5 to 65 mass%. From the same viewpoint, the content of the isocyanate compound (III) in the adhesive composition is more preferably 10 mass% or more, and more preferably 45 mass% or less.

Note that the above content is based on the mass of the dried material (solid content ratio).

[Rubber Latex (IV)]

The adhesive composition can further substantially contain a rubber latex (IV) in addition to the above polyphenols (I), aldehydes (II), and isocyanate compound (III). Thereby, the adhesive composition can further enhance adhesiveness to the rubber member.

Here, the rubber latex (IV) is not particularly limited, and examples include, in addition to natural rubber (NR), synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinylpyridine-styrene-butadiene copolymer rubber (Vp). These rubber latexes (IV) may be used alone or in combination of two or more.

When preparing an adhesive composition containing the rubber latex (IV), it is preferable to mix the rubber latex (IV) with the phenols (I) and aldehydes (II) before adding the isocyanate compound (III).

The content of the rubber latex (IV) in the adhesive composition is preferably 20 mass% or more, more preferably 25 mass% or more, and preferably 70 mass% or less, more preferably 60 mass% or less.

The method for producing the adhesive composition is not particularly limited, and examples include a method of mixing and aging raw materials such as polyphenols (I), aldehydes (II), and rubber latex (IV), or a method of mixing and aging polyphenols (I) and aldehydes (II), and then further adding and aging rubber latex (IV). When the raw materials include an isocyanate compound (III), the method may be such that rubber latex (IV) is added and aged, and then the isocyanate compound (III) is added.

Further, the belt protective layer is preferably formed by subjecting the organic fiber cord to adhesive treatment, then coating with elastomer to form a narrow strip, and then continuously spirally winding it in the tire circumferential direction.

The tire of the present embodiment can be applied to various vehicles, for example, it can be applied to all types of tires such as passenger vehicle tires, truck and bus tires, large-sized tires for construction vehicles, and motorcycle tires. Further, the tire of the present embodiment may be a pneumatic tire or a non-pneumatic tire.

(One Embodiment)

Next, one embodiment of the tire of the present disclosure will be exemplified and described in detail with reference to the drawings.

FIG. 1 is a cross-sectional view of one embodiment of the tire of the present disclosure. The tire 100 illustrated in FIG. 1 includes: a pair of bead portions 10; a pair of sidewall portions 20; a tread portion 30; a carcass 50 extending in a toroidal shape between bead cores 40 embedded in the bead portions 10; a belt 60 composed of two belt layers 60A and 60B disposed in the tread portion 30 (more specifically, disposed on the tire radial direction outer side of the crown portion of the carcass 50); a belt protective layer 70A (also referred to as a "cap layer") disposed so as to cover the entirety of the belt 60 on the tire radial direction outer side of the belt 60; and a pair of belt protective layers 70B (also referred to as "layer layers") disposed so as to cover only both end portions of the belt protective layer 70A.

In the tire 100 illustrated in FIG. 1, the carcass 50 is composed of a single carcass ply, and includes a main body portion extending in a toroidal shape between a pair of bead cores 40 respectively embedded in the bead portions 10, and a turn-up portion wound radially outward around each bead core 40 from the inner side to the outer side in the tire width direction. However, in the tire of the present disclosure, the number of plies and structure of the carcass are not limited thereto. Here, the carcass ply constituting the carcass 50 is preferably formed by coating a plurality of reinforcing cords, which extend in a direction substantially perpendicular to the tire circumferential direction (for example, at an angle of 70 to 90°), with coating rubber; that is, the carcass 50 is preferably a radial carcass. As the reinforcing cord for the carcass 50, in addition to organic fiber cords such as polyethylene terephthalate cord, nylon cord, and rayon cord, a steel cord may also be used.

Further, the belt 60 of the tire 100 illustrated in FIG. 1 is composed of two belt layers 60A and 60B, and each of the belt layers 60A and 60B is usually formed by coating steel cords, which extend inclined (for example, at an angle of 15 to 40°) with respect to the tire equator, with coating rubber. Furthermore, the two belt layers 60A and 60B are laminated such that the steel cords constituting the belt layers 60A and 60B cross each other across the tire equator, thereby forming the belt 60.

Note that, although the belt 60 in FIG. 1 is composed of two belt layers 60A and 60B, in the tire of the present disclosure, the number of belt layers constituting the belt may be one or more, and is not limited thereto.

Further, in the tire 100 illustrated in FIG. 1, the belt protective layers 70A and 70B are formed by coating reinforcing cords, which are arranged substantially parallel (for example, at an angle of 0 to 5° with respect to the tire circumferential direction) to the tire circumferential direction, with coating rubber. The belt protective layers 70A and 70B are formed by continuously spirally winding, in the tire circumferential direction, a narrow strip prepared by coating reinforcing cords with coating rubber. In this case, since there is no joint portion in the tire circumferential direction, the uniformity of the tire is improved, and since there is no joint portion, concentration of strain at the joint portion can also be prevented. As the reinforcing cord for the belt protective layers 70A and 70B, organic fiber cords such as polyethylene terephthalate cord, nylon cord, and rayon cord can be used.

Note that, although the tire 100 illustrated in FIG. 1 includes the belt protective layer 70A and the belt protective layer 70B, a tire in which either or both of the belt protective layer 70A and the belt protective layer 70B are omitted is also one embodiment of the tire of the present disclosure. Further, in the tire 100 illustrated in FIG. 1, each of the belt protective layers 70A and 70B is a single layer, but may be two or more layers.

In the carcass 50, the belt 60 (belt layers 60A and 60B), and the belt protective layers 70A and 70B, the coating rubber covering the reinforcing member (reinforcing cord) is not particularly limited, and various elastomers can be applied.

The elastomer preferably has a 50% modulus value, as measured in accordance with JIS K 6251 (2010), of 1.5 MPa or more, more preferably 1.8 MPa or more, and still more preferably 2.0 MPa or more.

As the main component of the elastomer, there may be mentioned: natural rubber (NR), isoprene rubber (IR), epoxidized natural rubber, styrene-butadiene rubber (SBR), butadiene rubber (BR, high-cis BR, and low-cis BR), nitrile rubber (NBR), hydrogenated NBR, hydrogenated SBR, and other diene rubbers and their hydrogenated products; ethylene-propylene rubber (EPDM, EPM), maleic acid-modified ethylene-propylene rubber (M-EPM), butyl rubber (IIR), copolymers of isobutylene and aromatic vinyl or diene monomers, acrylic rubber (ACM), ionomer, and other olefin rubbers; Br-IIR, Cl-IIR, brominated copolymers of isobutylene and paramethylstyrene (Br-IPMS), chloroprene rubber (CR), hydrin rubber (CHR), chlorosulfonated polyethylene rubber (CSM), chlorinated polyethylene rubber (CM), maleic acid-modified chlorinated polyethylene rubber (M-CM), and other halogen-containing rubbers; methylvinyl silicone rubber, dimethyl silicone rubber, methylphenylvinyl silicone rubber, and other silicone rubbers; polysulfide rubber and other sulfur-containing rubbers; vinylidene fluoride rubbers, fluorinated vinyl ether rubbers, tetrafluoroethylene-propylene rubbers, fluorosilicone rubbers, fluorophosphazene rubbers, and other fluororubbers; and thermoplastic elastomers such as styrene-based elastomers, olefin-based elastomers, ester-based elastomers, urethane-based elastomers, and polyamide-based elastomers. The 50% modulus value of the elastomer (coating rubber) is a value measured in accordance with JIS K 6251 (2010) after vulcanizing the rubber composition of each sample at 145°C for 40 minutes to obtain a vulcanized rubber.

Further, the elastomer may be appropriately blended with, in addition to sulfur, vulcanization accelerator, and carbon black, age resistor, zinc oxide (zinc white), stearic acid, and other additives commonly used in rubber products such as tires.

(Other Embodiments)

It should be noted that the tire of the present disclosure may have a configuration other than the tire 100 illustrated in FIG. 1.

For example, not only a pneumatic tire but also a non-pneumatic tire is possible. In that case, as long as 30 mass% or more of the steel filaments in the belt layer are derived from recycled iron, the other configurations are not particularly limited, and members may be appropriately selected and provided.

EXAMPLES

The present disclosure will be further described in detail below by way of examples, but the present disclosure is not limited in any way to the following examples.

(Steel Filaments for Testing)

Steel filament 1 produced from recycled iron derived from an electric furnace and steel filament 2 were prepared. Here, the N element content of steel filament 1 as measured by spark discharge atomic emission spectrometry was 71 mass ppm, and the N element content of steel filament 2 as measured by spark discharge atomic emission spectrometry was 90 mass ppm. The durability against twisting of these steel wires was evaluated by the following method.

(Twist Test)

Both ends of a test steel wire of 20 cm in length were fixed, and the wire was twisted by rotating in one direction (clockwise with respect to the axial direction of the steel wire), and the total number of rotations until the test steel wire broke was determined and evaluated according to the following criteria. The results are presented in Table 1.

Excellent: Total number of rotations until breakage is 50 or more
Good: Total number of rotations until breakage is 20 to 49
Poor: Total number of rotations until breakage is 19 or less

[Table 1]

|  | Steel filament 1 | Steel filament 2 |
|---|---|---|
| Nitrogen content (mass ppm) | 71 | 90 |
| Evaluation result of twist test | Excellent | Poor |

From Table 1, it can be seen that steel filament 1 having an N element content of less than 90 mass ppm exhibits excellent durability against twisting.

REFERENCE SIGNS LIST

100: Tire
10: Bead portion
20: Sidewall portion
30: Tread portion
40: Bead core
50: Carcass
60: Belt
60A, 60B: Belt layer
70A, 70B: Belt protective layer

**Claims**

1. A tire comprising a belt layer including a steel cord,

   wherein the steel cord is composed of steel filaments and 30 mass% or more of the steel filaments are derived from recycled iron, and
   the filaments derived from the recycled iron have an N element content of 60 mass ppm or more.

2. The tire according to claim 1, wherein the steel filaments derived from the recycled iron have a C element content of 0.7 to 1.0 mass%, a Cu element content of 0.01 to 0.4 mass%, and a Cr element content of 0.05 to 0.3 mass%.

3. The tire according to claim 2, wherein the steel filaments derived from the recycled iron have the Cu element content of 0.05 to 0.4 mass%.

4. The tire according to claim 1 or 2, wherein the steel filaments derived from the recycled iron have a diameter of 0.3 mm or less.

5. The tire according to claim 1 or 2, wherein the steel cord further includes steel filaments derived from non-recycled iron, and
   the steel filaments derived from the non-recycled iron have an N element content of 20 to 40 mass ppm, a C element content of 0.7 to 0.85 mass%, a Cu element content of 0 to 0.1 mass%, and a Cr element content of 0 to 0.1 mass%.

6. The tire according to claim 1 or 2, further comprising a belt protective layer on an outer side in a tire radial direction of the belt layer,
   wherein the belt protective layer includes an organic fiber cord, and the organic fiber cord has an elastic modulus of 4.0 mN/(dtex·%) or more.

7. The tire according to claim 1 or 2, wherein a cross-section of the steel cord is a flat, and has a ratio of a major axis to a minor axis of 1.1 or more.

# FIG. 1

EP 4 681 942 A1

## INTERNATIONAL SEARCH REPORT

| International application No. |
|---|
| **PCT/JP2024/009636** |

| A. | CLASSIFICATION OF SUBJECT MATTER |
|---|---|

***B60C 9/00***(2006.01)i; ***B60C 9/20***(2006.01)i; ***B60C 19/00***(2006.01)i
FI:  B60C9/00 K; B60C19/00 L; B60C9/00 A; B60C9/20 E

According to International Patent Classification (IPC) or to both national classification and IPC

| B. | FIELDS SEARCHED |
|---|---|

Minimum documentation searched (classification system followed by classification symbols)

B60C1/00-B60C19/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2020-76020 A (EVER CLEAN KK) 21 May 2020 (2020-05-21) <br> claims, paragraph [0016] | 1-7 |
| Y | 日鉄総研株式会社, カーボン ニュートラルを踏まえた我が国金属産業の持続的発展に向けた調査事業報告書, February 2022, non-official translation (NITTETSU SOKEN KK. Research report toward sustainable development of Japanese metal industry based on carbon neutrality.) <br> pp. 4-6, 33, line 17, p. 33, line 27 to p. 34, line 4 | 1-7 |
| X | JP 2021-161445 A (NIPPON STEEL CORPORATION) 11 October 2021 (2021-10-11) <br> claims, paragraphs [0059]-[0069], tables 1, 3, steel D1, test no. 6 | 1-4 |
| Y | | 5-7 |
| Y | JP 2000-144323 A (SUMITOMO METAL INDUSTRIES, LTD.) 26 May 2000 (2000-05-26) <br> claims, paragraph [0001], steels 1-5, 7-10 | 5 |
| Y | JP 60-152659 A (NIPPON STEEL CORPORATION) 10 August 1985 (1985-08-10) <br> claims, test material I, p. 5, lines 7-19 | 5 |

| ✓ Further documents are listed in the continuation of Box C. | ✓ See patent family annex. |
|---|---|

| \* | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2024** | **14 May 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

International application No.

**PCT/JP2024/009636**

**C. DOCUMENTS CONSIDERED TO BE RELEVANT**

| Category* | Citation of document, with indication, where appropriate, of the relevant passages | Relevant to claim No. |
|---|---|---|
| Y | JP 9-59744 A (KAWASAKI STEEL CORP.) 04 March 1997 (1997-03-04) claims, paragraphs [0002]-[0004], [0013], test no. 1-2, 4-8, 10-18 | 5 |
| Y | JP 2005-112065 A (BRIDGESTONE CORPORATION) 28 April 2005 (2005-04-28) claims, paragraph [0002], example 3 | 6 |
| Y | JP 2022-84351 A (TOCHIGI SUMITOMO DENKO K.K.) 07 June 2022 (2022-06-07) claims | 7 |

Form PCT/ISA/210 (second sheet) (July 2022)

## INTERNATIONAL SEARCH REPORT
### Information on patent family members

International application No.

**PCT/JP2024/009636**

| Patent document cited in search report | | | Publication date (day/month/year) | Patent family member(s) | | | Publication date (day/month/year) |
|---|---|---|---|---|---|---|---|
| JP | 2020-76020 | A | 21 May 2020 | (Family: none) | | | |
| JP | 2021-161445 | A | 11 October 2021 | (Family: none) | | | |
| JP | 2000-144323 | A | 26 May 2000 | (Family: none) | | | |
| JP | 60-152659 | A | 10 August 1985 | (Family: none) | | | |
| JP | 9-59744 | A | 04 March 1997 | (Family: none) | | | |
| JP | 2005-112065 | A | 28 April 2005 | US 2007/0006957 A1 claims, paragraph [0002], example 3 EP 1671813 A1 CN 1863684 A ES 2319999 T | | | |
| JP | 2022-84351 | A | 07 June 2022 | CN 114537047 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3753965 A1
- JP 2023040157 A
- JP 2023030762 A
- WO 2022130879 A